# EUROPEAN PATENT SPECIFICATION

(11) **EP 0 403 202 B1**
(45) Date of publication and mention of the grant of the patent: **14.12.1994**
(21) Application number: 90306336.0
(22) Date of filing: 11.06.1990
(51) Int. Cl.: B62B 3/10

(54) **Trolley**
Handwagen
Chariot

(30) Priority: 10.06.1989 GB 8913422; 20.10.1989 GB 8923913; 13.01.1990 GB 9000798
(43) Date of publication of application: 19.12.1990
(73) Proprietor: Lloyd, Gerald Eric, Oxford, Oxon OX2 9HA (GB)
(72) Inventor: Lloyd, Gerald Eric, Oxford, Oxon OX2 9HA (GB)
(74) Representative: Rock, Olaf Colin

(56) References cited:
- EP-A- 0 352 647
- WO-A-85/05334
- GB-A- 2 218 053

## Description

This invention relates to a trolley. It is particularly concerned with a trolley of a general type extensively utilised in supermarkets, warehouses, airport termini and other locations for use and propulsion by pedestrians wishing to transfer loads such as purchases, luggage or equipment from one location to another.

A typical general trolley of this type takes the form of a raised basket secured to a chassis which is supported by four wheels or castors. The basket is provided with a handle whereby the trolley can be propelled by the user. The basket is disposed at a height comparable with or greater than the greatest spacing between the wheels of the front or the rear pair of wheels. This enables objects to be readily placed into and removed from the basket without the need for an excessive range of vertical movement by a user of average height. However the resulting raised centre of gravity of a loaded trolley can lead to handling difficulties since when loaded the high centre of gravity makes it difficult to push the trolley across a sloping floor since a resultant force acts to cause the trolley to crank about an axis perpendicular to the slope so that the trolley lies at an angle to the desired direction of travel if this is not directly up or down the slope.

Manoeuvring such a trolley on a slope can is particularly difficult for a user who is poorly co-ordinated, weak or infirm.

Another type of general trolley in widespread use comprises a load carrying platform mounted on a chassis and positioned closely above front and rear pairs of wheels that is to say by a vertical distance less than the smallest spacing between the front or the rear wheel pairs of the ground engaging wheels of the trolley. This low platform type of trolley is for use in builders suppliers and other locations involving the transport of bulky and/or heavy loads such as planks, pipes, sheets or rolls of material or bags of powdered or particulate material. A low platform for such loads provides for a low loading height and for the centre of gravity of the combined load and trolley to be maintained as low as possible.

A typical general trolley, whether of the basket or low platform or of some other type, has two front and two rear wheels. The wheel layout can be with the wheels at the corners of a rectangular pattern. A common alternative uses a trapezoidal layout with the normally leading pair of wheels being mounted on a narrower wheel track than the rear pair. At least the rear wheels are generally mounted on offset trailing pivots so that in pushing the trolley forwardly the trailing pivots provide for their associated wheels to swing into a trailing position relative to the direction of movement.

Manoeuvring can also be adversely affected by an ill-maintained trolley which has at least one wheel which either does not readily rotate about its horizontal axis of symmetry or, in the case of a castor action wheel, does not readily swing to follow a trailing alignment.

In US Patent 4 826 186 (Hagelin) there is described a stackable hand trolley equipped with a front pair of swivelling wheels, a rear pair of swivelling wheels and one or two non-swivelling central wheels located at a lower level than the plane defined by the front and rear pair of wheels. The bottom frame of the trolley is constituted by two lateral bars and two central bars placed respectively on opposite sides of the longitudinal plane of symmetry of the trolley, the rear ends of the central bars being closer to the plane of symmetry than the front ends and the bottom frame being thus M-shaped when viewed from the rear. The central wheels are placed beneath the central bars while the front wheels are placed at the same location as the common front ends of the lateral bars and of the central bars, the rear wheels being placed at the same location as the rear ends of the lateral bars. Hagelin provides a trolley for satisfactory steering making use of the central wheels to resist an unwanted lateral steering bias. However Hagelin achieves this by way of an elaborate structure involving two rather than a single guide wheel mounted on an U-shaped frame and also using a spring loading arrangement extending between a vertically displaceable load platform on the trolley, rather than the chassis of the trolley as such, and the central bars for the guide wheels.

According to the present invention there is provided a trolley having a pair of front and a pair of rear wheels disposed symmetrically on a chassis relative to a longitudinal axis thereof for ground engaging rotation in a common plane and a guide wheel located intermediate the front and rear wheels for ground engaging rotation in the common plane about a horizontal lateral axis which axis is disposed at right angles to the longitudinal axis and an arm having an inboard end and an outboard end the outboard end bearing the guide wheel; the inboard end incorporating an attachment to the chassis enabling the guide wheel to be displaced vertically; a resilient loading device acting to resiliently bias the guide wheel by way of the arm downwardly into ground engagement in the common plane; and a raising means for the guide wheel acting by way of the arm such that, on the trolley being closely stacked with a similar trolley, the raising means on one trolley interacts with the other trolley to cause the guide wheel to be raised out of the common plane and so out of ground engagement **characterised in that** the attachment (84) provides for the inboard end (83) of the arm (82) to be rigidly secured to the chassis at a region lying between axis of rotation (20, 21) of the front pair of wheels (18,19) and the axis of rotation (28,29) of the rear pair of wheels (26,27) at least when the axis (20,21) of the pairs are at right angles to the longitudinal axis (15) of the trolley; the arm (82) is in the form of an inherently resilient member so combining the functions of arm and resilient loading device; the attachment (84) providing an alignment for the arm (82) such that when the guide wheel (80) lies on the common plane (C) the arm (82) resiliently urges the guide wheel (80) towards the common plane (C) away from the remainder of the trolley.

According to a first preferred version of the present invention the trolley is further characterised in that the arm (82) is a leading arm (relative to the normal direction of travel (F) of the trolley) with the inboard end (83) being the trailing end of the arm and the outboard end (81) the leading end of the arm (80).

According to a second preferred version of the present invention the trolley is further characterised in that the arm (82) is a trailing arm (relative to the normal direction F of travel of the trolley) with the inboard end (83) being the leading end of the arm and the outboard end (81) the trailing end of the arm (80).

According to third preferred version of the present invention or any preceding preferred version thereof the trolley is further characterised by a load carrying platform disposed above the pairs of front and rear wheels by an space comparable with or greater than the greatest spacing (16) of wheels (26,27) in one or other pair.

According to a fourth preferred version of the present invention or to the first, second or third preferred version thereof the trolley is further characterised by a load carrying platform disposed above the pairs of front and rear wheels by a space less than the least spacing (17) of wheels (18,19) in one or other pair.

Broadly the trolley of the invention provides for the guide wheel to be located at a point about which the trolley can be rotated on a vertical axis. The guide wheel is located on the end of an inherently trailing, or leading, arm attached to the trolley. The inherent resilience of the arm serves to maintain the guide wheel in contact with the ground.

An exemplary embodiment of the invention will now be described with reference to the accompanying drawing of chassis for a supermarket trolleys of which:
Figure 1 is a perspective view of a chassis for a first trolley of known type;
Figure 2 is a plan view of the chassis shown in Figure 1; and
Figure 3 is a side view of a part of the trolley embodying the present invention.

### Figures 1 and 2

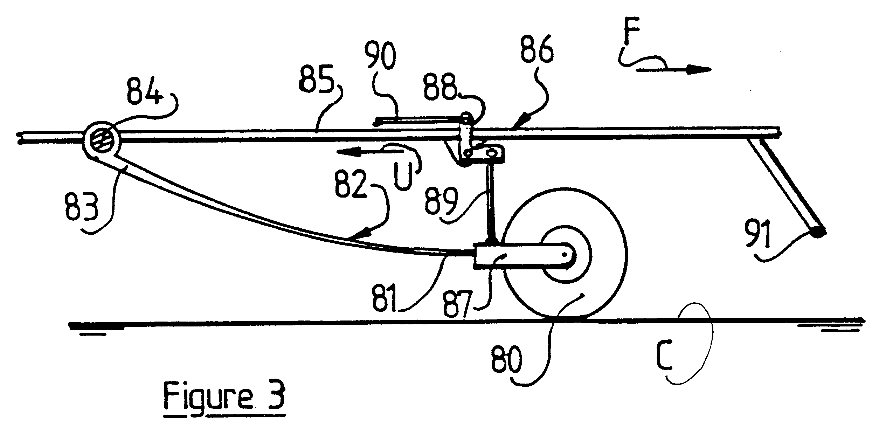

These show chassis 11 and running gear of a supermarket trolley reflecting some, but not all, the features of the present invention so as to describe the behaviour of a trolley in use. Figure 3 is the only figure incorporating all the features of the present invention. The chassis 11 has mounted in a known way above it a loading basket and handle which, being of conventional type, are not further described. The chassis has a front transverse section 12 and side arms 13, 14 which are splayed outwardly so as to lie symmetrically on either side of axis 15. The normal path of travel of the trolley is in direction F.

Front wheels 18, 19 are mounted in, respectively, carriers 18A, 19A for rotation about, respectively, individual horizontal axes 20, 21. Carriers 18A, 19A are adapted for castor action rotation about, respectively, vertical axes, 24, 25.

Rear wheels 26, 27 are mounted in, respectively, carriers 26A, 27A for rotation about, respectively, individual horizontal axes 28, 29. The carriers 26A, 27A are adapted for castor action rotation about, respectively, vertical axes 32, 33.

The front wheels 18, 19 and the rear wheels 26, 27 are located for ground engaging rotation in a common plane represented by the ground over which the trolley passes. Spacing 16 between rear wheels 26, 27 is greater than spacing 17 between the front end wheels 26, 27 as is reflected in the relative alignment of the side arms 13, 14.

Guide wheel 34 is mounted for rotation about horizontal axis 35 on an rigid arm 36. The wheel 34 is located on trailing end 37 of the arm 36 whose leading end 38 is pivotably attached to a first cross-member 39 so as to be rotatable about horizontal axis 40 parallel to axis 35 lying behind the axis of rotation of the front wheels when travelling in forward direction 51.

A second cross-member 41 is secured to the chassis behind first cross-member 39. On the second cross-member 41 there is mounted a retainer 42 for one end of a compression spring 43 whose other end seats on an intermediate section 44 of trailing arm 36 between its trailing end 37 and leading end 38. The spring 43 is mounted on a centre post 45 secured to the top side of section 44. Post 45 serves to resist lateral distortion of the spring 43 whatever its degree of expansion or compression. The spring 43 causes the guide wheel 34 to be resiliently loaded downwardly to ensure frictional contact between the wheel 34 and the ground over which it passes regardless of the load carried by the trolley. The guide wheel 34 is normally intended for ground engagement in the common plane of the front and rear wheels as mentioned earlier. The linkage between wheel 34 and remainder of the chassis 11 ensures that while the wheel 34 can readily rotate about axis 35 and by way of arm 36 about axis 40 parallel to axis 35 about which leading end 38 of the arm pivots. The wheel 34 resists any attempt to displace it in a direction transverse the direction F of travel. This contrasts with the remaining wheels 18, 19, 26, 27 which in addition to rolling about their horizontal axes (respectively axes 20, 21, 28, 29) can freely pivot about vertical castor axes (respectively axes 24, 25, 32, 33).

The guide wheel 34 is disposed on the chassis 11 to lie approximately midway between the front and rear wheels at a point approximately beneath the centre of gravity of the trolley which tends to have the same fore and aft location whether the trolley is empty or (uniformly) loaded. The basket is located on the chassis some way above the ground plane on which wheels 18, 19, 26, 27 roll.

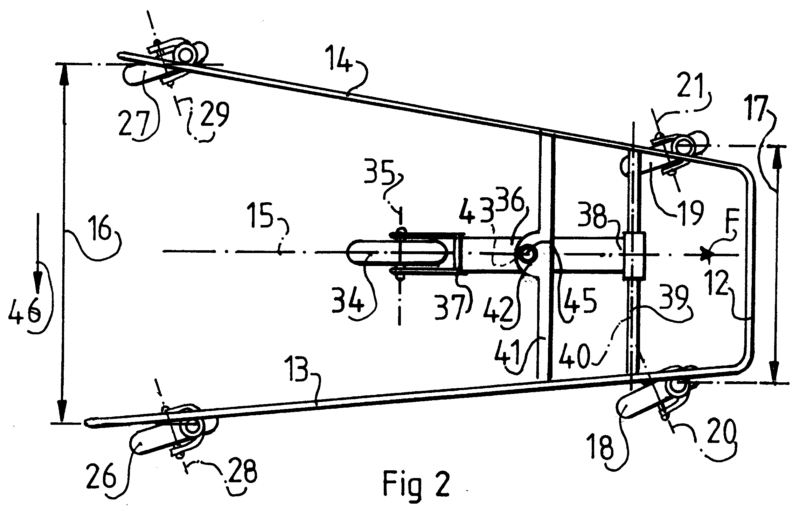

With the trolley loaded and pushed in the direction of arrow F, and with the guide wheel 34 in contact with the ground, the guide wheel 34 serves to resist lateral displacement of the trolley. To turn the trolley to the left (as seen in Figure 2) the handle of the trolley while continuing to be pushed is drawn appropriately to the right as shown by arrow 46 so causing a moment of force to act made up of the force applied to the handle and the distance between the handle and the vertical axis of the guide wheel 34. Given the steering action referred to the carriers 18A, 19A, 26A, 27A take up positions as shown so that their associated wheels follow the required track while providing support for the trolley. The guide wheel 34 is located at the approximate centre of the trolley so that when the trolley is rotated about a vertical axis the guide wheel will serve as a pivot centre for the turning trolley so that it does not inhibit ready rotation of the trolley on a vertical axis in the vicinity of the centre of gravity of the trolley whether light or in any reasonably uniformly loaded condition.

Once travelling forwardly in a straight line again the fixed tracking effect of the guide wheel 34 ensures that any tendency on the part of trolley chassis to drift sideways under lateral loading is resisted by the frictional contact between wheel 34 and the ground. Such drifting can arise with a heavily loaded trolley in passing over an inclined floor especially or in the event of one or more poorly compliant wheels or wheel carriers.

Two situations can arise where the tracking effect of the guide wheel needs to be temporarily removed.

Firstly a manoeuvring problem in relation to using a single trolley when the trolley is located close to an obstacle parallel to the longitudinal axis of the trolley. Typically this can occur when the trolley has been pushed from an open area directly alongside a display stand or cold cabinet. The guide wheel 34 resists any attempt by a user to readily manoeuvre in any direction apart from the straight ahead direction F (or in the opposite direction). Provision can be made of a linkage to temporarily raise the arm 36 as will be described hereafter in connection with Figure 3.

Secondly there can be a problem in relation to guiding a nested set of trolleys. When several trolleys of this type are used individually in a given location and then abandoned they are usually recovered and stored as a stack of trolleys. By nesting one trolley in part within another longitudinally it is possible to generate a set of trolleys which is of shorter length than the sum of the lengths of the individual trolleys. For the purpose of nesting each trolley is generally of tapered section in plan and the rear end of each trolley has a pivoted rear section of basket which is pushed out of the way by the front of a trolley is pushed into the rear of the front trolley. Once a stack has been formed the stack needs to be moved as a unit and as such it needs to be steerable to a limited extent so that the stack can be directed back to a storage location. This can be undertaken with conventional trolleys. However in the case of trolleys according to the present invention the guide wheels 34 of each trolley in a stack would resist any tendency for the stack to be steered from the longitudinal axis of the stack.

A method for resolving these two situations will ow be described in relation to the exemplary embodiment of Figure 3.

### Figure 3

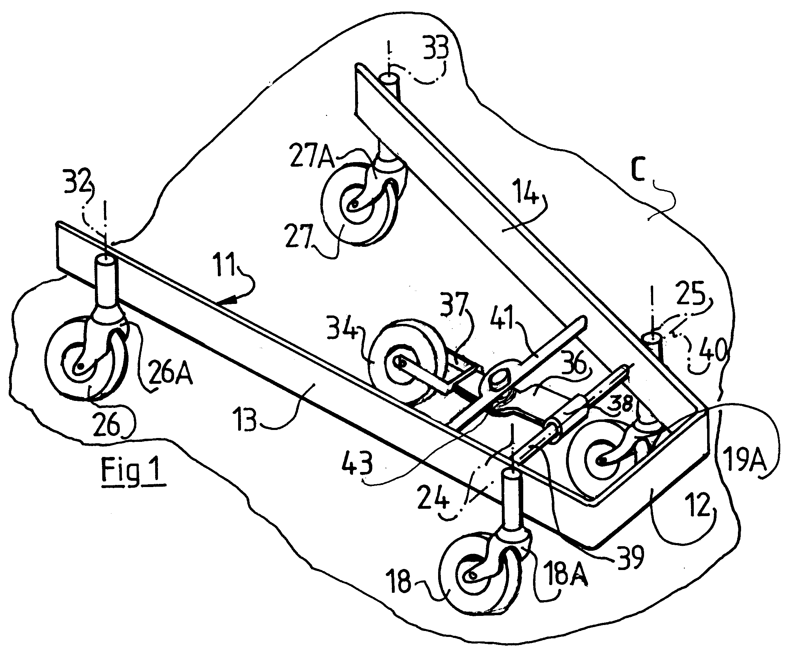

This shows a part of a trolley with a chassis generally similar to that shown in Figures 1 and 2 saving for the mounting of guide wheel 80 which functions in a similar manner to that of guide wheel 34 but is mounted differently.

The guide wheel 80 is mounted on leading end 81 of a leading arm 82 which is in the form of a tapered leaf spring having its trailing end 83 rigidly secured to cross member 84 secured to side members 85 of trolley chassis 86. Leading end 81 of the arm 82 is rigidly attached to wheel carrier 87. The arm 82 is sufficiently wide (or is composed of a number of separate parallel leafs so as) to provide for the wheel 80 to be maintained in a vertical and horizontal alignment to ensure the wheel 80 provides the required directional control. The normal (forward) direction of travel is in the direction of arrow F. The use of an inherently resilient arm obviates the need for a rigid arm loaded by way of a separate resilient loading device. It also provides for a detent like effect in the event of the trolley being subjected to a shock loading.

To allow for the ready manoeuvring of a single trolley the wheel carrier 87, and so the wheel 80, can be raised by way of a pivoted link 88 coupled to carrier 87 by cable 89 and by cable 90 to a hand lever on the handle of the trolley as described in connection with Figure 3. The drawing of cable 80 in the direction of arrow U results in the raising of the wheel 80.

To allow for steering of a nested stack of such trolleys the trolley is pushed in the direction of arrow F into the back of a similar trolley. Cross member 91 engages under the corresponding arm to arm 82 so as to drive the arm upwards and cause the wheel corresponding to wheel 80 to be raised from the ground.

While the specific embodiment of Figures 1 to 3 refer to a supermarket trolley it will be apparent that the invention is applicable to a range of trolleys intended for different types of load. Typically the proportions of the trolley can be adapted to optimize the ability of the trolley to support the load in the most effective manner which enables a guide wheel corresponding to wheel 34 or 80 to function in the manner previously described. Thus while a supermarket trolley is concerned with carrying a sometimes substantial load of small and medium size goods a trolley for carrying sheets or lengths of timber or wood or sheets or bars of metal or plastic material or pipework involves the provision of stable transport for unwieldy material. A trolley for this purpose is readily constructed according to the invention and includes a load carrying platform as close to the wheels as possible to keep the centre of gravity of a loaded trolley as low as possible.

The present invention as embodied in Figure 3 makes use of an inherently resilient leading arm arrangement where the wheel providing for lateral resistance is on the leading end. However a trailing arm arrangement can also be used. The fabrication of the arm from a plastics material will serve to cut down on the number of separate components that need to be used in the case of an assembly fabricated from metal.

## Claims

1. A trolley having a pair of front and a pair of rear wheels disposed symmetrically on a chassis relative to a longitudinal axis thereof for ground engaging rotation in a common plane and a guide wheel located intermediate the front and rear wheels for ground engaging rotation in the common plane about a horizontal lateral axis which axis is disposed at right angles to the longitudinal axis and an arm having an inboard end and an outboard end the outboard end bearing the guide wheel; the inboard end incorporating an attachment to the chassis enabling the guide wheel to be displaced vertically; a resilient loading device acting to resiliently bias the guide wheel by way of the arm downwardly into ground engagement in the common plane; and a raising means for the guide wheel acting by way of the arm such that, on the trolley being closely stacked with a similar trolley, the raising means on one trolley interacts with the other trolley to cause the guide wheel to be raised out of the common plane and so out of ground engagement **characterised in that** the attachment (84) provides for the inboard end (83) of the arm (82) to be rigidly secured to the chassis at a region lying between axis of rotation (20, 21) of the front pair of wheels (18, 19) and the axis of rotation (28, 29) of the rear pair of wheels (26, 27) at least when the axis (20, 21) of the pairs are at right angles to the longitudinal axis (15) of the trolley; the arm (82) is in the form of an inherently resilient member so combining the functions of arm and resilient loading device; the attachment (84) providing an alignment for the arm (82) such that when the guide wheel (80) lies on the common plane (C) the arm (82) resiliently urges the guide wheel (80) towards the common plane (C) away from the remainder of the trolley.

2. A trolley as claimed in Claim 1 **characterised in that** the arm (82) is a leading arm (relative to the normal direction of travel (F) of the trolley) with the inboard end (83) being the trailing end of the arm and the outboard end (81) the leading end of the arm (80).

3. A trolley as claimed in Claim 1 **characterised in that** the arm (82) is a trailing arm (relative to the normal direction F of travel of the trolley) with the inboard end (83) being the leading end of the arm and the outboard end (81) the trailing end of the arm (80).

4. A trolley as claimed in any preceding claim **characterised by** a load carrying platform disposed above the pairs of front and rear wheels by an space comparable with or greater than the greatest spacing (16) of wheels (26, 27) in one or other pair.

5. A trolley as claimed in any one of Claims 1 to 3 **characterised by** a load carrying platform disposed above the pairs of front and rear wheels by a space less than the least spacing (17) of wheels (18, 19) in one or other pair.

## Patentansprüche

1. Wagen mit einem Paar Vorderräder und einem Paar Hinterräder, die relativ zu einor Längsachse eines Fahrgestells symmetrisch an diesem angebracht sind und zu einer Rotationsbewegung in Berührung mit dem Boden in einer gemeinsamen Ebene ausgelegt sind, und mit einem Leitrad, das sich zwischen den Vorderrädern und den Hinterrädern befindet und zu einer Rotationsbewegung in Berührung mit dem Boden in der gemeinsamen Ebene um eine horizontale laterale Achse ausgelegt ist, die rechtwinklig zu der Längsachse angeordnet ist, und mit einem Arm mit einem innenliegenden Ende und einem außenliegenden Ende, wobei das außenliegende Ende das Leitrad trägt; wobei das innenliegende Ende eine Befestigung an dem Fahrgestell beinhaltet, die eine Verlagerung des Leitrads in vertikaler Richtung ermöglicht; mit einer federnd nachgiebigen Vorspanneinrichtung, die eine federnd nachgiebige Vorspannung des Leitrads mittels des Arms nach unten in Berührung mit dem Boden in der gemeinsamen Ebene bewirkt; und mit einer Anhebeeinrichtung für das Leitrad, die mit Hilfe des Arms derart wirkt, daß bei enger Stapelung des Wagens mit einem ähnlichen Wagen die Anhebeeinrichtung an dem einen wagen mit dem anderen Wagen derart zusammenwirkt, daß das Leitrad aus der gemeinsamen Ebene und somit aus der Bodenberührung heraus angehoben wird,
dadurch gekennzeichnet, daß die Befestigung (84) eine starre Anbringung des innenliegenden Endes (83) des Arms (82) an dem Fahrgestell in einem Bereich vorsieht, der sich zwischen der Rotationsachse (20, 21) des vorderen Räderpaares (18, 19) und der Rotationsachse (20, 29) des hinteren Räderpaares (26, 27) befindet, wenigstens wenn die Achsen (20, 21) der Paare rechtwinklig zu der Längachse (15) des Wagens sind; daß der Arm (82) in Form eines Elements mit inhärentem Federvermögen vorliegt und somit die Funktionen des Arms und der federnd nachgiebigen Vorspanneinrichtung kombiniert; wobei die Befestigung (84) eine derartige Ausrichtung für den Arm (82) vorsieht, daß dann, wenn das Leitrad (80) auf der gemeinsamen Ebene (C) liegt, der Arm (82) das Leitrad (80) in federnd nachgiebiger Weise von dem Rest des Wagens weg in Richtung auf die gemeinsame Ebene (C) drückt.

2. Wagen nach Anspruch 1,
dadurch gekennzeichnet, daß es sich bei dem Arm (82) (relativ zu der normalen Bewegungsrichtung (F) des Wagens) um einen vorangehenden Arm handelt, wobei das innenliegende Ende (83) das hintere Ende des Arms bildet und das außenliegende Ende (81) das vordere Ende des Arme (80) bildet.

3. Wagen nach Anspruch 1,
dadurch gekennzeichnet, daß es sich bei dem Arm (82) (relativ zu der normalen Bewegungsrichtung F des Wagens) um einen nachfolgenden Arm handelt, wobei das innenliegende Ende (83) das vordere Ende des Arms bildet und das außenliegende Ende (81) das hintere Ende des Arms (80) bildet.

4. Wagen nach einem der vorausgehenden Ansprüche,
gekennzeichnet durch eine lasttragende Plattform, die über den Vorder- und Hinterräderpaaren in einem Abstand angeordnet ist, der mit dem größten Abstand (16) zwischen den Rädern (26, 27) des einen oder des anderen Paares vergleichbar oder größer als dieser ist.

5. Wagen nach einem der Ansprüche 1 bis 3,
gekennzeichnet durch eine lasttragende Plattform, die über den Vorder- und Hinterräderpaaren in einem Abstand angeordnet ist, der kleiner als der kleinste Abstand (17) zwischen den Rädern (26, 27) des einen oder des anderen Paares ist.

## Revendications

1. Chariot comprenant une paire de roues avant et une paire de roues arrière disposées symétriquement sur un châssis par rapport à un axe longitudinal de celui-ci afin qu'elles tournent au contact du sol dans un plan commun, et une roue de guidage placée entre les roues avant et arrière et destinée à tourner au contact du sol dans le plan commun ou autour d'un axe latéral horizontal qui est perpendiculaire à l'axe longitudinal, et un bras ayant une extrémité interne et une extrémité externe, l'extrémité externe portant la roue de guidage, l'extrémité interne ayant un organe de fixation au châssis permettant un déplacement vertical de la roue de guidage, un dispositif d'application d'une charge élastique qui rappelle élastiquement la roue de guidage à l'aide du bras, vers le bas,au contact du sol dans le plan commun,et un dispositif de soulèvement de la roue de guidage agissant par l'intermédiaire du bras de manière que, lorsque le chariot est empilé sous forme condensée avec un chariot analogue, le dispositif de soulèvement d'un premier chariot interagisse avec l'autre chariot et provoque le soulèvement de la roue de guidage en dehors du plan commun et donc à distance du contact avec le sol, caractérisé en ce que l'organe de fixation (84) assure la fixation rigide de l'extrémité interne (83) du bras (82) au châssis dans une région comprise entre l' axe de rotation (20, 21) de la paire de roues avant (18, 19) et l'axe de rotation (28, 29) de la paire de roues arrière (26, 27) au moins lorsque les axes (20, 21) des paires sont perpendiculaires à l'axe longitudinal (15) du chariot, le bras (82) est sous forme d'un organe ayant une élasticité propre afin qu'il combine les fonctions du bras et du dispositif d'application d'une force élastique, et l'organe de fixation (84) assure l'alignement du bras (82) afin que, lorsque la roue de guidage (80) est dans le plan commun (C), le bras (82) repousse élastiquement la roue de guidage (80) vers le plan commun (C) à distance du reste du chariot.

2. Chariot selon la revendication l, caractérisé en ce que le bras (82) est un bras tourné vers l'avant (dans la direction normale de déplacement (F) du chariot), l'extrémité interne (83) constituant l'extrémité arrière du bras et l'extrémité externe (81) l'extrémité avant du bras (80).

3. Chariot selon la revendication 1, caractérisé en ce que le bras (82) est un bras postérieur (par rapport à la direction normale F de déplacement du chariot), l'extrémité interne (83) constituant l'extrémité avant du bras et l'extrémité externe (81) constituant l'extrémité arrière du bras (80).

4. Chariot selon l'une quelconque des revendications précédentes, caractérisé par une plate-forme de support de charge placée au-dessus des paires de roues avant et arrière avec un espacement au moins comparable au plus grand espacement (16) des roues (26, 27) de l'une ou l'autre paire.

5. Chariot selon l'une. quelconque des revendications 1 à 3, caractérisé par une plate-forme de support de charge disposée au-dessus des paires de roues avant et arrière à une distance inférieure au plus petit espacement (17) des roues (18, 19) de l'une ou l'autre paire.
